# EUROPÄISCHE PATENTSCHRIFT

(11) **EP 3 204 792 B1**
(45) Veröffentlichungstag und Bekanntmachung des Hinweises auf die Patenterteilung: **30.12.2020**
(21) Anmeldenummer: 16711551.8
(22) Anmeldetag: 11.03.2016
(51) Int. Cl.: G01S 15/93, B60W 40/04, G06K 9/62, B60W 30/08, G06K 9/00, G01S 15/931, G08G 1/16

(54) **VERFAHREN ZUM BEREITSTELLEN VON HINDERNISKARTEN FÜR FAHRZEUGE**
METHOD FOR PROVIDING OBSTACLE MAPS FOR VEHICLES
PROCÉDÉ DE FOURNITURE DE CARTES DES OBSTACLES POUR VÉHICULES

(30) Priorität: 24.03.2015 DE 102015205244
(43) Veröffentlichungstag der Anmeldung: 16.08.2017
(73) Patentinhaber: Bayerische Motoren Werke Aktiengesellschaft, 80809 München (DE)
(72) Erfinder: WALESSA, Marc, 80999 München (DE); KORMANN, Oliver, 74360 Ilsfeld (DE)
(86) Internationale Anmeldenummer: PCT/EP2016/055212
(87) Internationale Veröffentlichungsnummer: WO 2016/150728

(56) Entgegenhaltungen:
- EP-A1- 2 771 873
- DE-A1-102011 081 740
- DE-A1-102013 207 905

## Beschreibung

Die Erfindung betrifft ein Verfahren zum Bereitstellen einer Hinderniskarte sowie ein entsprechend eingerichtetes elektronisches Steuergerät.

Für viele zukünftige Fahrfunktionen und Fahrerassistenzsysteme eines Fahrzeugs, insbesondere das automatisierte Fahren, Einparkassistent, etc, ist die Erfassung des Umfeldes des Fahrzeugs unerlässlich. Insbesondere muss meist festgestellt werden, welche Abschnitte des Umfeldes nicht durch Hindernisse blockiert sind und damit uneingeschränkt befahrbar sind. Die Umfelderfassung wird dabei mit verschiedenen Sensorsystemen wie Kameraverbünde, Radar, Lidar und Ultraschallsensoren, ausgeführt. Zur Modellierung des Umfelds eines Fahrzeugs für verschiedene Kamera- bzw. generell sensorbasierte Fahrerassistenzsysteme (z.B. Einparkassistent), wird typischerweise eine Umfeldkarte, häufig auch als Occupancy Grid bezeichnet, als Modell verwendet.

Eine Umfeldkarte umfasst Umfelddaten, die aus der Verarbeitung von Sensormessungen des Umfeldes resultieren und diese repräsentieren. Die Umfelddaten werden dabei meist nach Abschnitten des Umfeldes geordnet. Jedem Abschnitt werden diejenigen Umfelddaten zugeordnet, die aus Messungen in diesem Abschnitt resultieren. Die Umfelddaten können unterschiedliche Informationstypen je Zelle umfassen, beispielsweise die Belegungswahrscheinlichkeit der jeweiligen Zelle (also die Wahrscheinlichkeit, dass die Zelle von einem Hindernis belegt ist), die Höhe des Hindernisses etc.

Manche Fahrerassistenzfunktionen benötigen zur Modellierung des Umfeldes nicht die abstrakte Belegungswahrscheinlichkeit als Information, sondern die Information, ob ein Abschnitt des Umfeldes durch ein Hindernis belegt ist, oder nicht. Ein Hindernis in einem Abschnitt bedeutet dabei, dass der Abschnitt des Umfeldes nicht oder nur unter Bedingungen mit dem Fahrzeug befahren werden kann.

Zur Bereitstellung der Hindernisinformation, wird typischerweise eine Hinderniskarte erzeugt, die Zellen umfasst, die jeweils Abschnitten des Umfeldes des Fahrzeugs zugeordnet sind und denen jeweils die Information zugewiesen ist, ob der entsprechende Abschnitt des Umfeldes mit einem Hindernis belegt ist. Typischerweise entchende Abschnitt des Umfeldes mit einem Hindernis belegt ist. Typischerweise entsprechen die Zellen der Hinderniskarte den Zellen der Umfeldkarte und die zugeordneten Abschnitte sind gleich. Die Information, ob ein Abschnitt durch ein Hindernis belegt ist, wird durch den Vergleich der dem Abschnitt zugeordneten Belegungswahrscheinlichkeit der Umfeldkarte mit einem Schwellwert ermittelt. In manchen Ausprägungen kann darüber hinaus die für den Abschnitt festgestellte Hindernishöhe berücksichtigt werden.

Im Fahrzeugbereich sind Sensorsysteme bekannt, die mittels eines "Structure from Motion" (SFM) genannten Verfahrens durch aufeinanderfolgende Kameraaufnahmen des Fahrzeugs aus verschiedenen Positionen heraus Hindernisse erkennen können. Allerdings ist diese Erkennung häufig fehlerbehaftet. Deshalb wird, um in einer Umfeldkarte aussagekräftige Belegungswahrscheinlichkeiten zu erzeugen, häufig die durch SFM erkannte Belegungswahrscheinlichkeit eines Abschnitts mit vorhergehend erkannten Belegungswahrscheinlichkeiten desselben Abschnitts verrechnet. Es findet also eine Akkumulation der erkannten Belegungswahrscheinlichkeiten einer Zelle der Umfeldkarte statt.

Gleichzeitig ist im SFM Verfahren die korrekte Erkennung der Belegungswahrscheinlichkeit durch ein Hindernis in einem Abschnitt abhängig von der Entfernung zum Fahrzeug und dem Winkel zur Fahrzeuglängsachse. Beispielsweise werden Hindernisse frontal vor dem Fahrzeug häufiger nicht korrekt erkannt, als Hindernisse seitlich des Fahrzeugs. Selbst bei einer Akkumulation der zeitlich nacheinander bestimmten Belegungswahrscheinlichkeiten werden Hindernisse in der Umfeldkarte durch unterschiedliche Belegungswahrscheinlichkeiten repräsentiert.

Bei der Erzeugung der Hinderniskarte basierend auf der Umfeldkarte durch Schwellwertbildung, entsteht so das Problem, dass Hindernisse, die aufgrund der Erkennungseigenschaften des SFM nur unzureichend durch Belegungswahrscheinlichkeiten repräsentiert werden, nicht in der Hinderniskarte verzeichnet werden.

Dokument DE 10 2011 081740 A1 betrifft eine Fahrumgebung-Erkennungseinrichtung, die in der Lage, eine Fahrumgebung eines Fahrzeugs präzise zu erkennen. Eine Belegungsgitterkarte, die eine Belegungswahrscheinlichkeit jedes Hindernisses für die Fahrt des eigenen Fahrzeugs für jede Zelle der Belegungsgitterkarte speichert, wird erzeugt, und die Belegungswahrscheinlichkeit für jede Zelle wird aktualisiert.

Der Erfindung liegt die Aufgabe zugrunde, das vorgehend erläuterte Problem zu lösen.

Die Aufgabe wird durch das Verfahren, die Steuereinheit und das Fahrzeug gemäß den unabhängigen Ansprüchen gelöst. Vorteilhafte Weiterbildungen sind in den abhängigen Ansprüchen definiert.

Ein Aspekt der Erfindung betrifft ein Verfahren zum Bereitstellen einer Hinderniskarte für Fahrfunktionen und Fahrerassistenzsysteme eines Fahrzeugs, wobei die Hinderniskarte Zellen umfasst, die jeweils Abschnitten des Umfeldes des Fahrzeugs zugeordnet sind und denen jeweils die Information zugewiesen ist, ob der entsprechende Abschnitt des Umfeldes mit einem Hindernis belegt ist; wobei das Verfahren umfasst: Bereitstellen einer Umfeldkarte, wobei die Umfeldkarte Zellen umfasst, die jeweils Abschnitten des Umfeldes des Fahrzeugs zugeordnet sind und denen jeweils eine Hinderniswahrscheinlichkeit zugewiesen ist, die die Wahrscheinlichkeit repräsentiert, dass der entsprechende Abschnitt des Umfeldes mit einem Hindernis belegt ist und die aus der Verarbeitung von Sensormessungen des Umfelds des Fahrzeugs resultiert; Bereitstellen einer Schwellwertvorschrift; wobei die Schwellwertvorschrift für Zellen der Umfeldkarte unterschiedliche Schwellwerte angibt; wobei die Schwellwertvorschrift abhängig von der Trajektorie, insbesondere einem Teil der bisherigen Trajektorie, des Fahrzeugs bestimmt wird; Bestimmen der Hinderniskarte basierend auf der Umfeldkarte und abhängig von der Schwellwertvorschrift. Die Schwellwertvorschrift kann eine explizite Angabe von Schwellwerten für jede Zelle der Umfeldkarte umfassen (auch Schwellwertkarte genannt) oder in einer geschlossenen Form dargestellt werden (Formel), aus der sich die Schwellwerte für einzelne Zellen der Umfeldkarte ermitteln lassen. Manchmal wird die Schwellwertkarte auch Explorationsgrid genannt. In die Bereitstellung der Umfeldkarte können Sensormesswerte mehrerer Sensorsysteme eingehen, beispielsweise Messungen aus Kamerasystemen und Ultraschallsystemen. Gleichzeitig kann die Schwellwertvorschrift die Erkennungseigenschaften (insbesondere Richtungs- und Entfernungsabhängigkeit) des Sensorsystems des Fahrzeugs berücksichtigten, mit dem die Belegungswahrscheinlichkeiten der Umfeldabschnitte bestimmt werden.

Hierin wird also vorgeschlagen, keinen konstanten Schwellwert wie im Stand der Technik zu verwenden, sondern einen Schwellwert, der abschnittsbezogen (bzw. zellbezogen) variiert. Die Variation des Schwellwertes kann derart gewählt werden, dass die unterschiedlichen Erkennungseigenschaften von Hindernissen der Sensorik des Fahrzeugs berücksichtigt werden. Es wird für diejenigen Abschnitte ein hoher Schwellwert gewählt, für die die Erkennungseigenschaften des Sensors Hindernisse mit einer hohen Belegungswahrscheinlichkeit repräsentieren. Umgekehrt wird ein niedriger Schwellwert für jene Abschnitte gewählt, in denen Hindernisse durch geringere Belegungswahrscheinlichkeiten repräsentiert werden. Ebenfalls können die durch das Schwellwertmuster vorgegebenen Schwellwerte für die Abschnitte von der Fahrfunktion abhängen, die basierend auf der Hinderniskarte ausgeführt wird.

Teil dieser Berücksichtigung ist die Trajektorie des Fahrzeugs. Sie bestimmt, für welche Abschnitte sich die Sensoreigenschaften auswirken, also in welchen Abschnitten des Umfeldes Hindernisse mit einer hohen Belegungswahrscheinlichkeit repräsentiert werden und in welchen Abschnitten Hindernisse mit einer niedrigen Belegungswahrscheinlichkeit repräsentiert werden. Typischerweise wird die Schwellwertvorschrift für Umfeldabschnitte in Fahrtrichtung vor dem Fahrzeug einen geringeren Schwellwert ansetzen, als für Abschnitte, an denen die bisherige Fahrtrajektorie seitlich vorbeiführte.

Auf diese Weise werden auch weiter entfernt vor dem Fahrzeug in Fahrtrichtung liegende Hindernisse bei der Erstellung der Hinderniskarte korrekt erkannt. Gleichzeitig werden Hindernisse, die aufgrund der Sensoreigenschaften in höherem Maße erkannt werden (und in der Umfeldkarte eine entsprechend höhere Belegungswahrscheinlichkeit aufweisen) ebenfalls erkannt. Rauschen, das in jenen Bereichen gehäuft auftritt, in denen aufgrund der Sensoreigenschaften Hindernisse durch hohe Belegungswahrscheinlichkeiten repräsentiert sind, wird ebenfalls wirksam bei der Erstellung der Hinderniskarte unterdrückt.

In einer vorteilhaften Implementierung wird zur Bestimmung der Schwellwertvorschrift ein Schwellwertmuster wiederholt berücksichtigt; wobei das Schwellwertmuster für unterschiedliche Zellen aus einer Gruppe von Zellen verschiedene Schwellwertinkremente angibt. Die Gruppe von Zellen kann von der Anzahl her kleiner sein, als die Anzahl der Zellen der Umfeldkarte. Das Schwellwertmuster kann eine Schwellwertmusterkarte sein, die für einzelne Zellen Schwellwertinkremente vorgibt. Vorteilhafterweise folgenden die Schwellwerte, die das Muster angibt, einer Gauß-Funktion oder einer linearen Funktion. Das Schwellwertmuster gibt dabei die Eigenschaften der Hinderniserkennung des Sensorsystems bei einer einzelnen Messung wieder (wobei eine einzelne Messung hier als Datengrundlage verstanden wird, auf der die Aktualisierung der Umfeldkarte ausgeführt wird und durchaus mehrere Rohmessungen vereinen kann). Das Schwellwertmuster kann auch die Eigenschaften verschiedener Sensorsysteme berücksichtigen, beispielsweise SFM Kamerasysteme und Ultraschall. Hieraus können komplexe Schwellwertmuster entstehen.

Das Schwellwertmuster wird typischerweise unverändert wiederholt angewendet bzw. berücksichtigt. Ausgangspunkt kann dabei eine vorgegebene Start-Schwellwertvorschrift sein. Zu dieser wird wiederholt das Schwellwertmuster addiert, und zwar abhängig von der Trajektorie des Fahrzeugs. Der Schwellwert einzelner Zellen der Umfeldkarte kann dabei auf einen Maximalwert, beispielsweise 0,9, begrenzt werden.

Die inkrementelle Weiterentwicklung der Schwellwertvorschrift birgt den Vorteil, dass für jede aufeinanderfolgende Bestimmung der Hinderniskarte, auf der bisherigen Schwellwertvorschrift aufgebaut werden kann. Zu der zuletzt bestimmten Schwellwertvorschrift wird lediglich das Schwellwertmuster entsprechend der aktuellen Fahrzeugposition addiert. Die neue Fahrzeugposition kann auch durch eine Verschiebung der Umfeldkarte oder dessen Inhalts reflektiert werden.

Sofern die Aktualisierung der Umfeldkarte (aufgrund neuer Sensormessungen) in regelmäßigen Zeit- oder Wegabschnitten stattfindet, kann die Akkumulation (bzw. die Bereitstellung des aktualisierten Schwellwertmusters) in denselben Zeitabschnitten oder, sofern die Einarbeitung von dem Zurücklegen einer Fahrstrecke abhängig ist, nach vorbestimmten Wegstrecken der Fahrtrajektorie durchgeführt werden.

Zwischen der Bestimmung zweier Hinderniskarten können eine oder mehrere Berücksichtigungen bzw. Akkumulationen (Additionen) des Schwellwertmusters vorgenommen werden, um die dann anzuwendende Schwellwertvorschrift zu bestimmen. Dies kann von der Anzahl der Einarbeitung neuer Sensormessungen (also deren neu erkannten Belegungswahrscheinlichkeiten der Abschnitte des Umfelds) abhängen. Ebenso kann das Schwellwertmuster, insbesondere die Höhe der Schwellwertinkremente, von der Anzahl der Aktualisierungen der Umfeldkarte durch jeweils neue Sensormessungen des Umfeldes abhängen.

Das Schwellwertmuster kann abhängig von der Position und/oder Ausrichtung des Fahrzeugs in der Umfeldkarte bei der Bestimmung der Schwellwertvorschrift berücksichtigt werden. Dies bedeutet also, dass bei der Anwendung des Schwellwertmusters auf die Start-Schwellwertkarte die bei den einzelnen Zellen der Schwellwertkarte zu addierenden Schwellwertinkremente (aufgrund der Vorgaben des Schwellwertmusters) anhand der Fahrzeugposition bestimmt werden. Mit anderen Worten: Das Schwellwertmuster weist einen Referenzpunkt, beispielsweise den Symmetriepunkt des Musters, (und ggf. eine Referenzrichtung) auf, der an der Fahrzeugposition (und ggf. Fahrzeugausrichtung) orientiert wird.

In vorteilhaften Implementierungen ist Zellen der Umfeldkarte jeweils derselbe Abschnitt des Umfeldes zugeordnet wie Zellen der Hinderniskarte; wobei die Information für eine Zelle der Hinderniskarte durch einen Vergleich der Belegungswahrscheinlichkeit der entsprechenden Zelle der Umfeldkarte mit einem für die entsprechende Zelle der Umfeldkarte angegebenen Schwellwert gemäß der Schwellwertvorschrift gewonnen wird. Die Hinderniskarte und die Umfeldkarte entsprechen sich somit vom Zellaufbau her.

Ein anderer Aspekt der Erfindung betrifft ein elektronisches Steuergerät für Fahrzeuge, wobei das Steuergerät zur Ausführung eines der oben beschriebenen Verfahren eingerichtet ist. Das Steuergerät kann ein Mikrocontroller, eine CPU ein ASIC oder RISC sein. Ein weiterer Aspekt der Erfindung betrifft ein Fahrzeug, insbesondere einen PKW, umfassend das Steuergerät.

### KURZE BESCHREIBUNG DER ZEICHNUNGEN

Fig. 2 zeigt ein Messdiagramm einer Umfeldkarte gemäß einem Ausführungsbeispiel.
Fig. 3 zeigt ein Messdiagramm einer gemäß dem Stand der Technik erzeugten Hinderniskarte.
Fig. 4 zeigt ein Messdiagramm einer Hinderniskarte gemäß einem Ausführungsbeispiel der Erfindung.
Fig. 5 zeigt beispielhaft ein Diagramm einer erfindungsgemäßen Schwellwertkarte wie sie zur Bestimmung des Messdiagramms in Fig. 4 verwendet wurde.

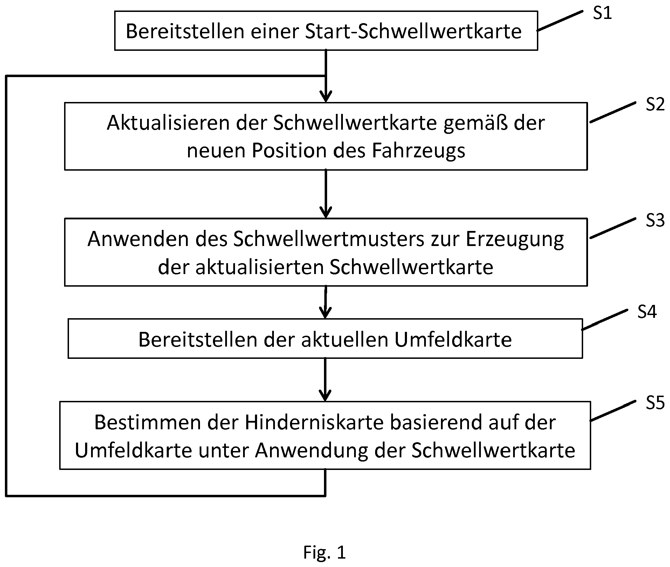

Fig. 1 zeigt ein Ablaufdiagramm eines Verfahrens gemäß einem Ausführungsbeispiel.

Gleiche Bezugszeichen beziehen sich auf sich entsprechende Elemente über die Diagramme hinweg.

### DETAILLIERTE BESCHREIBUNG DER AUSFÜHRUNGSBEISPIELE

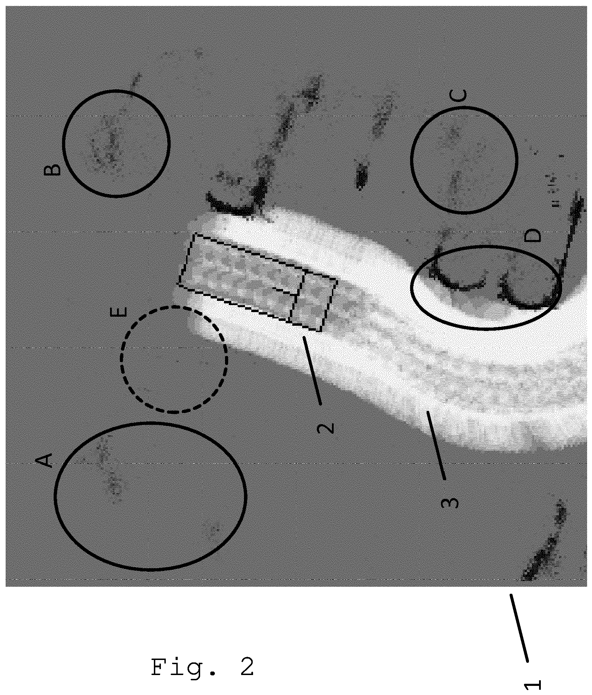

Fig. 2 zeigt das Messdiagramm einer Umfeldkarte 1 gemäß einem Ausführungsbeispiel. Die Umfeldkarte umfasst 256x256 Zellen, deren zugeordnete Belegungswahrscheinlichkeit anhand von Grauabstufungen dargestellt ist. Weiß bedeutet, dass der entsprechende Abschnitt des Umfeldes als unbelegt erfasst wurde, die Belegungswahrscheinlichkeit also mit 0% festgestellt wurde. Grau bedeutet, dass keine Aussage über die Belegung möglich ist, also eine Belegungswahrscheinlichkeit von 50% vorliegt. Schwarz bedeutet, dass eine Belegung vorliegt, der Zelle also eine Belegungswahrscheinlichkeit von 100% zugewiesen ist. Wie im Beispiel des Messdiagramms der Fig. 2 ersichtlich, ist der Mehrzahl der Zellen eine unbekannte Belegungswahrscheinlichkeit zugewiesen.

Die Messungen wurden vom Fahrzeug 2 mithilfe von Kameras des Fahrzeugs und eines SFM Verfahrens durchgeführt. Von den dabei ermittelten Belegungswahrscheinlichkeiten und Höheninformationen für die Abschnitte des Umfeldes sind im Messdiagramm der Fig. 2 nur die Belegungsinformationen dargestellt. Im Fahrzeug 2 wird die Hinterachse durch den Querbalken symbolisiert. Die bisherige Trajektorie des vorwärts fahrenden Fahrzeugs 2 ist durch die weiße Spur 3 ersichtlich. In Messdiagramm der Fig. 2 ist das Resultat der Belegungserkennung des Umfeldes nach Durchfahren der Spur 3 dargestellt.

In den Bereichen A und B vor dem Fahrzeug befinden sich jeweils Hindernisse. Aufgrund der Erkennungseigenschaften des verwendeten SFM Verfahrens wird diesen Hindernissen allerdings eine geringe Belegungswahrscheinlichkeit zugewiesen. Aufgrund der Entfernung zum Fahrzeug und der Anordnung in Fahrtrichtung vor dem Fahrzeug werden im SFM Verfahren selten Hindernisse gemessen.

Ebenfalls in Messdiagramm der Fig. 2 markiert ist Rauschen im Bereich E.

Im Bereich C werden Zellen fälschlicherweise Belegungswahrscheinlichkeiten größer 50% zugewiesen, obwohl sich dort kein Hindernis befindet. Dies resultiert aus systematischen Messfehlern, die wiederholt auftreten.

Im Bereich D befinden sich Hindernisse, die bei Messungen häufig als solche erkannt wurden. Folglich werden diese auch mit hohen Belegungswahrscheinlichkeiten im der Umfeldkarte repräsentiert.

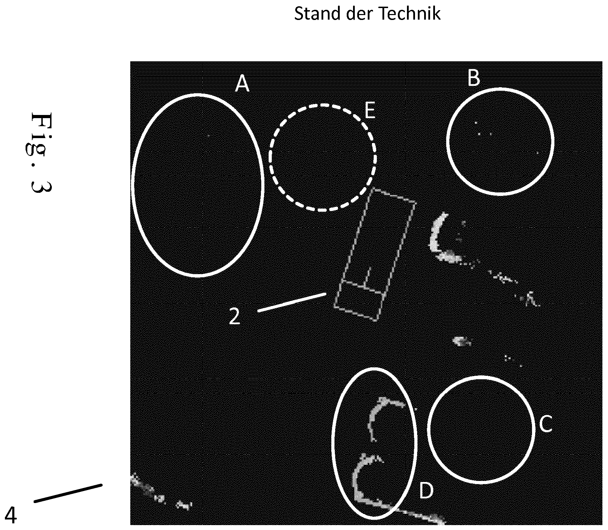

Fig. 3 zeigt ein Messdiagramm einer Hinderniskarte 4 gemäß einem Ausführungsbeispiel, die gemäß einer Schwellwertanwendung des Standes der Technik basierend auf der Umfeldkarte gemäß dem Messdiagramm der Fig. 2 bestimmt wurde. Diese Hinderniskarte 4 zeigt Höheninformationen, die einzelnen als mit einem Hindernis belegt erkannten Zellen zugeordnet sind. Schwarz symbolisiert Zellen, für die kein Hindernis erkannt wurde. Graustufen und Weiß symbolisieren ein Hindernis und die Höhe des Hindernisses. Zur Entscheidung, ob eine Zelle durch ein Hindernis belegt wird, wurde die Belegungswahrscheinlichkeit einer Zelle (im Messdiagramm der Fig. 2 dargestellt) jeweils mit demselben Schwellwert verglichen, beispielsweise 0,6. Wie ersichtlich ist, werden durch diesen Vergleich zwar effektiv das Rauschen im Bereich E und die systematischen Fehler in Bereich C unterdrückt. Allerdings werden auch die Hindernisse in den Bereichen A und B nicht korrekt erkannt bzw. repräsentiert.

Die Verwendung eines niedrigeren Schwellwertes als im Messdiagramm der Fig. 3 würde zwar zur Repräsentation der Hindernisse in den Bereichen A und B führen, aber auch fälschlicherweise Hindernisse in den Bereichen C und E anzeigen. Die Verwendung eines konstanten Schwellwertes wie im Stand der Technik bekannt, liefert im vorliegenden Beispiel der Sensormessungen mittels SFM also keine zufriedenstellende Erkennung von Hindernissen bei gleichzeitiger Rauschunterdrückung.

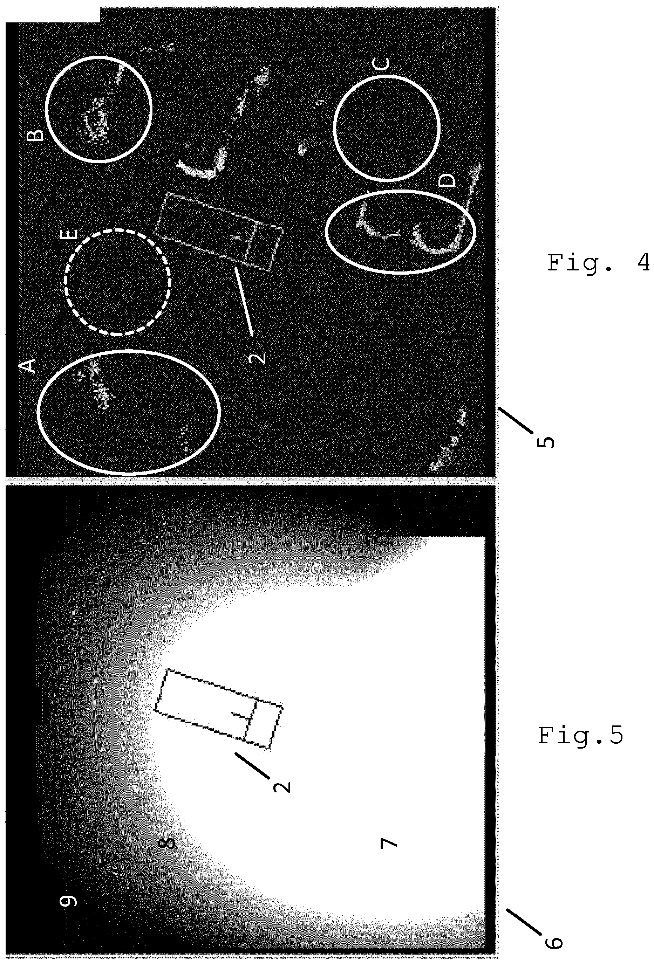

Fig. 4 zeigt ein Messdiagramm einer Hinderniskarte 5 gemäß einem Ausführungsbeispiel der Erfindung. Sie wurde durch Anwendung der Schwellwertkarte 6 gemäß dem Diagramm der Fig. 5 erzeugt. Die Schwellwertkarte 6 weist ebensoviele Zellen auf, wie die Umfeldkarte 1. Jeder Zelle der Umfeldkarte ist durch die Schwellwertkarte 6 ein Schwellwert zugeordnet. Im Diagramm der Fig. 5 wird der höchste Schwellwert (Bereich 7), beispielsweise 0,95, durch Weiß dargestellt, der niedrigste (Bereich 9), beispielsweise 0,3, durch Schwarz. Graustufen (Bereich 8) symbolisieren Werte dazwischen. Wie ersichtlich ist, hängt die Verteilung der Schwellwerte von der bisherigen Trajektorie des Fahrzeugs ab. Gleichzeitig werden die Sensoreigenschaften bei SFM Verfahren, nämlich die erschwerte Erfassung von Hindernissen in größerer Entfernung und frontal vor dem Fahrzeug, berücksichtigt.

Wie zur Erzeugung des Messdiagramms der Fig. 3 werden die Belegungswahrscheinlichkeiten der Zellen der Umfeldkarte 1 mit Schwellwerten verglichen. Allerdings sind gemäß der Erfindung die Schwellwerte für die einzelnen Zellen der Umfeldkarte 1 nicht einheitlich bzw. konstant, sondern, wie erläutert, je nach Lage (beispielsweise Zeile und Spalte) der Zelle unterschiedlich. Im Ergebnis werden die Hindernisse in den Bereichen A und B repräsentiert, während das Rauschen und die Fehlerkennung in den Bereichen E und C unterdrückt werden. Weiterhin korrekt erkannt werden die Hindernisse in Bereich D. Insgesamt gibt die Hinderniskarte 5 somit die Hindernisse im Umfeld besser wieder als gemäß dem in Hinderniskarte 4 dargestellten Verfahrensresultats des Standes der Technik.

Die Schwellwertkarte 6 und die Hinderniskarte wird mithilfe eines iterativen Verfahrens erzeugt, dass in Fig. 1 erläutert ist. In Schritt S1 wird eine Start-Schwellwertkarte bereitgestellt. Diese kann für alle Zellen denselben Schwellwert, beispielsweise 0,3 vorsehen. Diese die Schwellwertkarte wird im Schritt S2 gemäß der veränderten Position (und Ausrichtung) des Fahrzeugs angepasst. Typischerweise wird dies eine Verschiebung und Drehung der Schwellwertkarte umfassen, sofern die Schwellwertkarte stets symmetrisch und in gleichbleibender Ausrichtung zum Fahrzeug angeordnet sein soll.

Auf die Schwellwerte der einzelnen Zellen der Schwellwertkarte wird im Schritt S3 ein Schwellwertmuster angewandt. Das Schwellwertmuster kann ebenfalls als Schwellwertkarte betrachtet werden, deren einzelnen Zellen Schwellwertinkremente zugewiesen sind. Diese Schwellwertinkremente und Schwellwerte sich entsprechender Zellen werden addiert, um zur aktualisierten Schwellwertkarte zu gelangen. Die Schwellwertinkremente sind typischerweise geringer als die Schwellwerte der Start-Schwellwertkarte, beispielsweise 0,03; 0,05 oder 0,07. Sofern die Addition einen Maximalschwellwert überschreiten würde, beispielsweise 0,95, wird der Schwellwert der betrachteten Zelle auf den Maximalschwellwert gesetzt. Die Verteilung der Höhe der Schwellwertinkremente in den Zellen des Schwellwertmusters kann einer Kegelfunktion oder Gauß-Kurve folgen.

Es ist direkt verständlich, dass durch die wiederholte Anwendung des Schwellwertmusters auf die jeweils zuvor entstandene Schwellwertkarte, die Schwellwerte der Schwellwertkarte die bisherige Trajektorie des Fahrzeugs widerspiegeln.

Im Schritt S4 wird die aktuelle Umfeldkarte bereitgestellt. Wie zuvor beschrieben basierte die aktuelle Umfeldkarte auf wiederholten Eintragungen von Sensormesswerten (Belegungswahrscheinlichkeiten). Dabei werden die Belegungswahrscheinlichkeiten, die in einer Sensormessung festgestellt werden, auf zuvor für denselben Abschnitt erkannte Belegungswahrscheinlichkeiten addiert. Die Erstellung der Schwellwertkarte ist somit wie die Erstellung der Umfeldkarte iterativ. Im Verfahren kann vorgesehen sein, dass die Sensormesswerte mehrmals in die Umfeldkarte eingearbeitet werden, bevor darauf aufbauend eine neue Hinderniskarte erstellt wird. Die Schwellwerteinkremente des Schwellwertmusters sind entsprechend angepasst (also höher).

Im letzten Schritt S5 wird die Hinderniskarte bestimmt. Dazu werden in die Hinderniskarte nur für diejenigen Zellen Höheninformationen eingetragen, die als belegt erkannt wurden. Als belegt werden diejenigen Zellen erkannt, deren Belegungswahrscheinlichkeit über dem Schwellwert liegt, der für die entsprechende Zelle durch die Schwellwertkarte vorgegeben wird.

Die Schritte S2 bis S5 werden basierend auf der neu erstellten Schwellwertkarte wiederholt.

## Patentansprüche

1. Verfahren zum Bereitstellen einer Hinderniskarte für Fahrfunktionen und Fahrerassistenzsysteme eines Fahrzeugs, wobei die Hinderniskarte Zellen umfasst, die jeweils Abschnitten des Umfeldes des Fahrzeugs zugeordnet sind und denen jeweils die Information zugewiesen ist, ob der entsprechende Abschnitt des Umfeldes mit einem Hindernis belegt ist; wobei das Verfahren umfasst:
Bereitstellen einer Umfeldkarte, wobei die Umfeldkarte Zellen umfasst, die jeweils Abschnitten des Umfeldes des Fahrzeugs zugeordnet sind und denen jeweils eine Hinderniswahrscheinlichkeit zugewiesen ist, die die Wahrscheinlichkeit repräsentiert, dass der entsprechende Abschnitt des Umfeldes mit einem Hindernis belegt ist und die aus der Verarbeitung von Sensormessungen des Umfelds des Fahrzeugs resultiert;
Bereitstellen einer Schwellwertvorschrift;
wobei die Schwellwertvorschrift für Zellen der Umfeldkarte unterschiedliche Schwellwerte angibt;
wobei die Schwellwertvorschrift abhängig von der Trajektorie des Fahrzeugs bestimmt wird;
Bestimmen der Hinderniskarte basierend auf der Umfeldkarte und abhängig von der Schwellwertvorschrift.

2. Verfahren nach Anspruch 1, wobei zur Bestimmung der Schwellwertvorschrift ein Schwellwertmuster wiederholt berücksichtigt wird; wobei das Schwellwertmuster für unterschiedliche Zellen aus einer Gruppe von Zellen verschiedene Schwellwertinkremente angibt.

3. Verfahren nach Anspruch 2, wobei die Schwellwertvorschrift eine Schwellwertkarte umfasst, die für die Zellen der Umfeldkarte jeweils ein Schwellwertinkrement angibt.

4. Verfahren nach einem der Ansprüche 2 oder 3, wobei beim Berücksichtigen des Schwellwertmusters die Schwellwertinkremente des Schwellwertmusters zu den Schwellwerten einer vorhergehend bestimmten Schwellwertvorschrift, insbesondere Schwellwertkarte, addiert werden.

5. Verfahren nach einem der Ansprüche 2 bis 4, wobei das Schwellwertmuster abhängig von der Position und/oder Ausrichtung des Fahrzeugs in der Umfeldkarte bei der Bestimmung der Schwellwertvorschrift berücksichtigt wird.

6. Verfahren nach einem der vorhergehenden Ansprüche, wobei die Schwellwertvorschrift ferner zeitabhängig und/oder abhängig von der Einarbeitung von Sensormessungen des Umfeldes in die Umfeldkarte ist.

7. Verfahren nach einem der vorhergehenden Ansprüche, wobei Zellen der Umfeldkarte jeweils derselbe Abschnitt des Umfeldes zugeordnet ist wie Zellen der Hinderniskarte; wobei die Information für eine Zelle der Hinderniskarte durch einen Vergleich der Belegungswahrscheinlichkeit der entsprechenden Zelle der Umfeldkarte mit einem für die entsprechende Zelle der Umfeldkarte angegebenen Schwellwert gemäß der Schwellwertvorschrift gewonnen wird.

8. Elektronisches Steuergerät für Fahrzeuge, wobei das Steuergerät zur Ausführung eines Verfahrens nach einem der vorhergehenden Ansprüche eingerichtet ist.

9. Fahrzeug, umfassend ein Steuergerät nach Anspruch 8.

## Claims

1. Method for the preparation of an obstacle map for driving functions and driver assistance systems of a vehicle, wherein the obstacle map comprises cells, each of which is assigned to segments of the environment of the vehicle, and to each of which the information as to whether the corresponding segment of the environment is occupied by an obstacle is assigned; wherein the method comprises:
the preparation of an environment map, wherein the environment map contains cells, each of which is assigned to segments of the environment of the vehicle, and to each of which an obstacle probability is assigned that represents the probability that the corresponding segment of the environment is occupied by an obstacle and that results from processing sensor measurements of the environment of the vehicle;
the preparation of a threshold value specification;
wherein the threshold value specification for cells of the environment map specifies different threshold values;
wherein the threshold value specification is determined depending on the trajectory of the vehicle;
determination of the obstacle map on the basis of the environment map and depending on the threshold value specification.

2. Method according to Claim 1, wherein a threshold value pattern is repeatedly taken into account for determination of the threshold value specification; wherein the threshold value pattern gives different threshold value increments for different cells of a group of cells.

3. Method according to Claim 2, wherein the threshold value specification comprises a threshold value map that gives a threshold value increment for each of the cells of the environment map.

4. Method according to either of Claims 2 and 3, wherein, when considering the threshold value pattern, the threshold value increments of the threshold value pattern are added to the threshold values of a previously determined threshold value specification, in particular the threshold value map.

5. Method according to one of Claims 2 to 4, wherein the threshold value pattern is taken into account in the determination of the threshold value specification depending on the position and/or alignment of the vehicle in the environment map.

6. Method according to one of the preceding claims, wherein the threshold value specification is, furthermore, dependent on time and/or dependent on the incorporation of sensor measurements of the environment into the environment map.

7. Method according to one of the preceding claims, wherein the same segment of the environment is assigned to each cell of the environment map as the cells of the obstacle map; wherein the information for a cell of the obstacle map is obtained through a comparison of the occupancy probability of the corresponding cell of the environment map with a threshold value given for the corresponding cell of the environment map in accordance with the threshold value specification.

8. Electronic control device for vehicles, wherein the control device is designed to execute a method according to one of the preceding claims.

9. Vehicle comprising a control device according to Claim 8.

## Revendications

1. Procédé de fourniture d'une carte d'obstacles destinée à des fonctions de conduite et à des systèmes d'assistance à la conduite d'un véhicule, la carte d'obstacles comprenant des cellules qui sont chacune associées à des portions de l'environnement du véhicule et à chacune desquelles est attribuée l'information selon laquelle la portion correspondante de l'environnement est occupée par un obstacle ; le procédé comprenant les étapes suivantes :
fournir une carte d'environnement, la carte d'environnement comprenant des cellules qui sont chacune associées à des portion de l'environnement du véhicule et à chacune desquelles est attribuée une probabilité d'obstacle qui représente la probabilité que la portion correspondante de l'environnement soit occupée par un obstacle et qui résulte du traitement des mesures de l'environnement du véhicule par des capteurs ;
fournir une règle de valeur de seuil ;
la règle de valeur de seuil indiquant pour les cellules de la carte d'environnement différentes valeurs de seuil ;
la règle de valeur de seuil étant déterminée en fonction de la trajectoire du véhicule ;
spécifier la carte d'obstacles en fonction de la carte d'environnement et en fonction de la règle de valeur de seuil.

2. Procédé selon la revendication 1, un modèle de valeur de seuil étant pris en compte de manière répétée pour déterminer la règle de valeur de seuil ; le modèle de valeur de seuil indiquant différents incréments de valeur de seuil pour différentes cellules d'un groupe de cellules.

3. Procédé selon la revendication 2, la règle de valeur de seuil comprenant une carte de valeur de seuil qui indique un incrément de valeur de seuil pour chacune des cellules de la carte d'environnement.

4. Procédé selon l'une quelconque des revendications 2 et 3, dans lequel lors de la prise en compte du motif de valeur de seuil, les incréments de valeur de seuil du motif de valeur de seuil sont ajoutés aux valeurs de seuil d'une règle de valeur de seuil préalablement déterminée, notamment une carte de valeur de seuil.

5. Procédé selon l'une des revendications 2 à 4, le modèle de valeur de seuil étant pris en compte en fonction de la position et/ou de l'orientation du véhicule dans la carte d'environnement lors de la spécification de la règle de valeur de seuil.

6. Procédé selon l'une des revendications précédentes, la règle de valeur de seuil étant également dépendante du temps et/ou dépendante de l'intégration de mesures de capteur de l'environnement dans la carte d'environnement.

7. Procédé selon l'une des revendications précédentes, des cellules de la carte d'environnement étant chacune associées à la même portion de l'environnement que les cellules de la carte d'obstacles ; l'information pour une cellule de la carte d'obstacles étant obtenue par comparaison de la probabilité d'occupation de la cellule correspondante de la carte d'environnement avec une valeur de seuil indiquée pour la cellule correspondante de la carte d'environnement conformément à la règle de valeur de seuil.

8. Unité de commande électronique destinée à des véhicules, l'unité de commande étant adaptée pour mettre en œuvre un procédé selon l'une des revendications précédentes.

9. Véhicule comprenant une unité de commande selon la revendication 8.
